# EUROPÄISCHE PATENTSCHRIFT

(11) **EP 2 152 042 B1**
(45) Veröffentlichungstag und Bekanntmachung des Hinweises auf die Patenterteilung: **19.03.2014**
(21) Anmeldenummer: 09008801.4
(22) Anmeldetag: 06.07.2009
(51) Int. Cl.: H04W 56/00, H04B 7/155

(54) **Verfahren und Funkrelais zur zeitstarren Kopplung einer Empfangs- und einer Sendevorrichtung**
Method and radio relay with rigid time coupling between a receiving and a transmitting device
Méthode et relais radio avec couplage rigide en temps entre un dispositif récepteur et émetteur.

(30) Priorität: 08.08.2008 DE 102008037123
(43) Veröffentlichungstag der Anmeldung: 10.02.2010
(73) Patentinhaber: Rohde & Schwarz GmbH & Co. KG, 81671 München (DE)
(72) Erfinder: Wündisch, Dirk, 85567 Grafing (DE); Beckert, Stefan, 81825 München (DE); Volkheimer, Klaus, 85567 Grafing (DE)
(74) Vertreter: Beder, Jens

(56) Entgegenhaltungen:
- EP-A1- 1 648 099
- WO-A1-2007/102684
- US-A1- 2005 058 104
- US-A1- 2005 136 835

## Beschreibung

Die Erfindung betrifft ein Verfahren zur zeitstarren Kopplung einer Empfangs- und einer Sendevorrichtung in einem Funkrelais und ein Funkrelais zur zeitsynchronisierten Weiterleitung von Funksignalen.

Funksignale werden zunehmend aus Gründen der Sicherheit verschlüsselt. Eine Methode der Verschlüsselung, die selbstverständlich mit anderen kombinierbar ist, ist dabei ein festgelegter Wechsel von einem oder mehreren Übertragungsparametern zu exakt festgelegten Zeiten, wie z.B. beim Frequenzsprungverfahren. Dabei kennen sowohl der Sender als auch der Empfänger die Frequenzen, die in festgelegten Zeitintervallen gleichzeitig am Sender und am Empfänger eingestellt werden müssen. Um die Integrität der übertragenen Daten weiter zu erhöhen, werden die Übertragungsparameter innerhalb sehr kurzer Zeit gewechselt, so dass eine ständige Synchronisation der Uhren des Senders und des Empfängers erforderlich ist.

Wenn Funksignale über Distanzen übertragen werden sollen, die größer sind als die Reichweite der Sender, müssen diese durch ein Funkrelais, auch Radio Repeater genannt, verstärkt werden. Dabei treten ähnliche Probleme wie zwischen dem sendenden und dem empfangenden Funkgerät auf. Die Sendevorrichtung des Funkrelais zur Weiterleitung des empfangenen Funksignals muss zeitlich exakt auf die Empfangsvorrichtung synchronisiert werden, um das empfangene Signal wieder mit den zu der aktuellen Sendezeit gehörenden Übertragungsparametern zu senden. Die Weiterleitung der Information kann zwar zeitverzögert erfolgen, das verwendete Zeitschema muss jedoch identisch sein.

Eine Synchronisation von Sende- und Empfangsvorrichtung in einem Funkrelais ist in der deutschen Offenlegungsschrift DE 11 2004 002 471 T5 offenbart, die darüber hinausgehend eine Kollisionsprävention mittels Time Division vorschlägt. Gleichzeitig benötigt die mit der Empfangsvorrichtung verbundene Sendevorrichtung im Funkrelais auch Steuerinformationen zum Weitersenden des empfangenen Signals, welche in der Empfangsvorrichtung ausgelesen werden.

Siehe auch US-A-2005/058 104 (Yomo et al.).

Mobile Funkrelais, wie zum Beispiel im Flugfunk, erfordern eine einfache und leichte Konstruktion des Funkrelais. Dabei kommt es nicht nur auf das Gewicht, sondern auch auf die Gewichtsverteilung des Funkrelais an.

Die Aufgabe der Erfindung ist es, Funkrelais so zu verbessern und ein Verfahren zur Synchronisation innerhalb des Funkrelais zu schaffen, das für Funkübertragungen mit schnell wechselnden Übertragungsparametern geeignet ist und gleichzeitig leicht, einfach und kostengünstig konstruiert werden können.

Die Aufgabe ist durch das erfindungsgemäße Verfahren zur zeitstarren Kopplung einer Empfangs- und einer damit verbundenen Sendevorrichtung eines Funkrelais für einen Übertragungsstandard, der nach einem festgelegten Zeitschema mindestens einen Übertragungsparameter ändert, gelöst. Dazu wird zuerst ein Signal an einer Empfangsvorrichtung empfangen und darin enthaltene Steuerinformationen und ein darin enthaltenes Zeitschema werden aus dem empfangenen Signal ausgelesen. Daraufhin werden die ausgelesenen Steuerinformationen zusammen mit dem ausgelesenen Zeitschema von der Empfangsvorrichtung an die Sendevorrichtung übermittelt, wobei die Steuerinformationen zeitlich so übermittelt werden, dass ein in den Steuerinformationen enthaltenes Muster mit dem ausgelesenen Takt übereinstimmt. Hierzu wird eine an das Zeitschema angepasste Übertragung der Steuerinformationen durchgeführt. Die Steuerinformation wird einschließlich des verwendeten Zeitschemas analysiert und darauf basierend die Sendevorrichtung auf das Zeitschema der Empfangsvorrichtung aufsynchronisiert.

Die Aufgabe wird auch durch ein erfindungsgemäßes Funkrelais zur zeitsynchronisierten Weiterleitung von Funksignalen eines Übertragungsstandards, der nach festgelegten Zeitintervallen mindestens einen Übertragungsparameter ändert, gelöst. Das Funkrelais weist eine Empfangsvorrichtung zum Empfangen eines Signals und eine darin enthaltene Empfangskontrollvorrichtung zum Auslesen von Steuerinformationen und zum Auslesen des Zeitschemas des empfangenen Signals. Über eine erste Verbindung, welche die Empfangsvorrichtung mit einer Sendevorrichtung verbindet, werden die ausgelesenen Steuerinformationen und das ausgelesene Zeitschema des empfangenen Signals durch Festlegen eines Musters in der Steuerinformation als Taktgeber an die Sendevorrichtung übermittelt. Über eine zweite Verbindung wird das empfangene Signal an die Sendevorrichtung übermittelt. Die in der Sendevorrichtung enthaltene Sendekontrollvorrichtung synchronisiert sich auf Basis der in Form einer zeitlich angepassten Übertragung der Steuerinformation übermittelten Zeitschemas.

Die Unteransprüche betreffen vorteilhafte Weiterbildungen des erfindungsgemäßen Verfahren und des erfindungsgemäßen Funkrelais.

Das erfindungsgemäße Verfahren und das erfindungsgemäße Funkrelais sind besonders vorteilhaft, da durch die gemeinsame Übermittelung der Steuerinformationen und des Taktsignals einerseits eine Synchronisation der Empfangsvorrichtung mit der Sendevorrichtung möglich ist, aber keine separate Verbindung zur Übertragung des Taktsignals benötigt wird. Dadurch kann zum Beispiel ein Kabel oder eine Leitung eingespart werden, was eine Kostenersparnis bezüglich Material, Verkabelung und Prüfung darstellt. Zusätzlich werden so Gewichtsvorteile und auch ein Vorteil der Gewichtsverteilung geschaffen, da bewegliche Teile wie Kabel eine variable Gewichtsverteilung erzeugen. Die Vorteile des Gewichts und der Gewichtsverteilung treten dabei besonders im fliegenden Funkrelais auf.

Ein Ausführungsbeispiel wird nachfolgend anhand der Zeichnung beschrieben. Die Zeichnung zeigt:
- Fig. 1: eine Kommunikation eines Ausführungsbeispiels des erfindungsgemäßen Funkrelais;
- Fig. 2: eine Vergrößerung des Ausführungsbeispiels des erfindungsgemäßen Funkgeräts;
- Fig. 3: ein Ausführungsbeispiel eines erfindungsgemäßen, die Steuerinformationen und den Takt enthaltenden Telegramms.

Das nachfolgend beschriebene Ausführungsbeispiel bezieht sich auf ein erfindungsgemäßes Verfahren und Funkrelais für einen Übertragungsstandard, der ein Frequenzsprungverfahren aufweist. Die Frequenzsprünge treten innerhalb sehr kurzer Zeit auf, weshalb eine exakte Synchronisation der Sendevorrichtung auf die Empfangsvorrichtung in dem Funkrelais benötigt wird. Um eine Zeitdrift zu vermeiden, wird die Synchronisation zyklisch wiederholt. Bei dem Ausführungsbeispiel handelt es sich weiterhin um einen Übertragungsstandard, der zu jedem Zeitpunkt nur eine Funkverbindung in einer Übertragungsrichtung erlaubt, wobei die Übertragungsrichtung gewechselt werden kann. Bei dem Ausführungsbeispiel handelt es sich um Sprechfunk, bei dem der Sendevorgang durch das Drücken einer Sprechtaste an einem Funkgerät initiiert wird und daraufhin Audiodaten übertragen werden. Die Erfindung ist jedoch nicht auf Sprechfunk beschränkt. Zusätzlich handelt es sich bei dem Ausführungsbeispiel um ein fliegendes Funkrelais, wo das Gewicht eine entscheidende Rolle spielt. Das Ausführungsbeispiel ist allerdings nicht beschränkend.

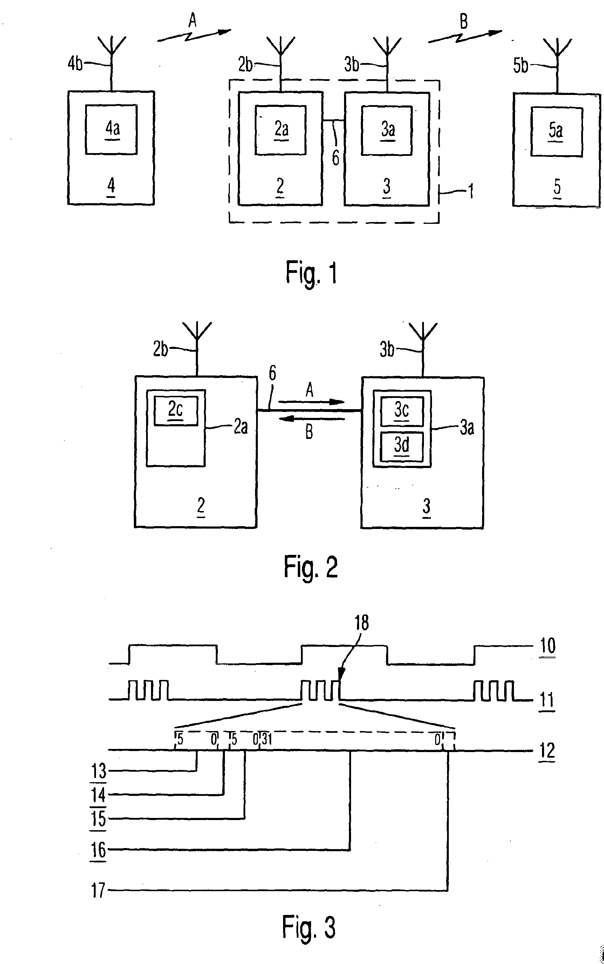

Fig. 1 zeigt ein Ausführungsbeispiel eines Funkrelais 1, welches das von dem Funkgerät 4 über die Antenne 4b gesendeten Signals an das Funkgerät 5 weitersendet. Fig. 2 zeigt das aus Fig. 1 vergrößerte Funkrelais. Das Funkgerät 5 empfängt das weitergesendete Signal über die Antenne 5b und verarbeitet das empfangene Signal in dem sogenannten Electronic Protection Measurement (EPM) Prozessor 5a als Kontrollvorrichtung. Dabei kann natürlich auch das Funkgerät 5 als sendendes Funkgerät und Funkgerät 4 als empfangendes Funkgerät auftreten. Die nachfolgende Beschreibung beschränkt sich jedoch der Einfachheit halber auf eine Übertragungsrichtung. Das Funkgerät kommuniziert mit der Empfangsvorrichtung 2 in einem ersten Funknetz A während zur Weiterleitung die Sendevorrichtung 3 mit dem zweiten Funkgerät 5 in einem zweiten Funknetz 3 kommuniziert. Die Zuordnung ist fest und bleibt auch bei einem Wechsel der Übertragungsrichtung erhalten. Sowohl die Empfangsvorrichtung 2 als auch die Sendevorrichtung 3 sind zum Senden und Empfangen ausgelegt. Die verwendeten Bezeichnungen dienen daher nur der besseren Unterscheidung und entsprechen der beschriebenen Übertragungsrichtung. Die Funknetze A und B sind orthogonal zueinander. Damit die Orthogonalität in jedem Zeitpunkt erhalten bleibt ist daher eine zeitstarre Kopplung der Sendeeinrichtung 3 mit der Empfangseinrichtung erforderlich.

Entsprechend dem Übertragungsstandard ist die Übertragungsfrequenz zu der aktuellen Sendezeit festgelegt und es wird das zu sendende Signal über die Antenne 4b gesendet. Das Funkrelais 1 empfängt das gesendete Signal über die Antenne 2b der Empfangsvorrichtung 2 und verarbeitet das empfangene Signal in dem EPM Prozessor 2a als Empfangskontrollvorrichtung. Der EPM Prozessor 2a enthält eine Ausleseeinheit 2c, die die in dem empfangenen Signal enthaltenen Steuerinformationen und den durch die wechselnden Frequenzen vorgegebenen Takt ausliest.

Anstelle eines regelmäßigen Takts könnte auch jede andere Form eines vorab festgelegten Zeitschemas verwendet werden.

Die ausgelesenen Steuerinformationen und der ausgelesene Takt werden gemeinsam über eine Steuerleitung 6 an Sendevorrichtung 3 übermittelt, wie es nachfolgend noch näher erläutert wird. Das empfangene Signal wird über eine zweite, nicht dargestellte Leitung an die Sendevorrichtung 3 übermittelt. Als Leitung wäre sowohl ein Kabel als auch z. B. eine Leiterbahn auf einer Platine vorstellbar. Dies ist allerdings nicht beschränkend für die Erfindung und jede andere Verbindung, auch eine drahtlose, ist realisierbar. Vorzugsweise wird die Verbindung durch ein gut abgeschirmtes Kabel realisiert. Für die Verbindung zur Übertragung des empfangenen Signals gilt das gleiche.

Der EPM Prozessor 3a der Sendevorrichtung 3 des Funkrelais 1 weist eine Steuerinformationsanalysevorrichtung, nachfolgend kurz Auslesevorrichtung 3c auf, die die Steuerinformationen und den Takt auslesen. Eine Synchronisierungsvorrichtung 3d in dem EPM Prozessor 3a synchronisiert die Sendevorrichtung 3 zeitlich auf den ausgelesenen Takt. Daraufhin wird das übermittelte Nutzsignal entsprechend der übermittelten Steuerinformationen über die Antenne 3b gesendet. Dadurch, dass die Sendevorrichtung 3 über den übermittelten Takt mit dem an der Empfangsvorrichtung 2 empfangenen Signal synchronisiert ist, kann das an der Empfangsvorrichtung 2 empfangene Signal an der Sendevorrichtung 3 mit zeitsynchron eingestellten Übertragungsparametern gesendet werden. Zeitsynchron heißt dabei, dass die gleiche Zeitmessung, die über einen Frame-Clock im Signal vorgegeben wird, angewandt wird. Im konkreten Fall bedeutet das, dass sowohl die Sendevorrichtung 3 und die Empfangsvorrichtung 2 in dem Funkrelais als auch die Funkgeräte 4 und 5 bzw. deren EPM Prozessoren 2a, 3a, 4a und 5a die gleiche Zeitmessung haben, d.h. zeitstarr gekoppelt sind.

Trägerfrequenzwechsel oder andere Änderungen von Übertragungsparametern in den Netzen A und B erfolgen daher auf Basis eines identischen Zeitschemas. Befindet sich das Funkgerät 4 im Sendemodus, so wird dessen Zeitbasis zur Synchronisation der Empfangsvorrichtung 2 verwendet. Die Sendevorrichtung 3 wiederum synchronisiert auf die Empfangsvorrichtung 2 und das Funkgerät 5 auf die Sendevorrichtung 3. Nun ist gewährleistet, dass auch ein von dem Funkgerät 4 weit entferntes Funkgerät 5 das durch das Funkrelais 1 weitergeleitete Signal von dem Funkgerät 4 empfangen kann.

Fig. 2 zeigt durch die Pfeile A und B, dass die Weiterleitungsrichtung im Funkrelais 1 dynamisch umgeschaltet werden kann. Dazu wird die Übertragungsrichtung ohne zusätzliche Schaltleitung zwischen der Empfangsvorrichtung 2 und der Sendevorrichtung 3 durch Übertragen von Daten vorgegeben. Wechselt die Richtung, weil das Funkgerät 5 sendet, so empfängt die Sendevorrichtung 3 ein Signal und übermittelt Informationen entsprechend dem Pfeil B. Durch dieses Belegen der Leitung 6 wird der Richtungswechsel indiziert. Daraufhin wird die Empfangsvorrichtung 2 zu einer Sendevorrichtung umgeschaltet. Nun können die Informationen und Daten in den Leitungen nicht mehr in die durch den Pfeil A dargestellte Richtung, sondern nur in die entgegengesetzte Richtung B übertragen werden. Vorzugsweise wird bei dem Ausführungsbeispiel auf eine Kollisionserkennung bei der Richtungsumschaltung bewusst verzichtet, um das Funkrelais möglichst einfach zu gestalten. Gerade bei dem Ausführungsbeispiel, bei dem das Senden durch eine Sprechtaste initiiert wird und meistens eine begrenzte Anzahl an Personen am Funkverkehr teilnimmt, ist die Wahrscheinlichkeit von exakt gleichzeitig beginnenden Übertragungen sehr gering.

Fig. 3 stellt im Detail dar, wie die Steuerinformationen gemeinsam mit dem Takt vorzugsweise in dem Ausführungsbeispiel über die Steuerleitung 6 übermittelt werden können. Normalerweise werden die Steuerinformationen über die Steuerleitung 6 und wird über eine zusätzliche Leitung ein Taktsignal 10 an die Sendevorrichtung übermittelt. Das Taktsignal wird dabei dem Frame-Clock des empfangenen Signals entnommen. Um beide Informationen in nur einer Leitung zu übermitteln, werden die Steuerinformationen in einzelnen Telegrammen 18 an die Sendevorrichtung 3 geschickt. Ein Telegramm 18 wird dabei zeitlich genau dann geschickt, wenn das Taktsignal 10 einen Takt indiziert. Ein Taktbeginn wird in dem Ausführungsbeispiel jeweils durch eine steigende Flanke gekennzeichnet. Jeweils zeitgleich zu jeder detektierten steigenden, taktgebenden Flanke wird das Telegramm 18 an die Sendevorrichtung 3 gesendet. So entsteht ein Takt-Steuersignal 11, welches in den Telegrammen 18 die Steuerinformationen enthält und durch das jeweils erste Bit des Telegramms 18, welches mit der steigenden Flanke des Taktsignals 10 übereinstimmt, den Takt des empfangenen Signals übermittelt. Die Telegramme können dabei beliebigen Inhalt haben, da eine Zeitsynchronisation immer dann möglich ist, wenn die einzelnen Telegramme unterscheidbar sind. Damit ist jeweils das erste Bit detektierbar und kann von der Auslesevorrichtung 3 ermittelt werden.

Eine mögliche Realisierung des Telegramms wird nun beschrieben. Die ersten neun Startbits 13 können z.B. ein typisches Muster zur Erkennung des Beginns eines Telegramms 18 aufweisen. Darauffolgend wird hier ein Kontrollbit 14 übertragen. Daraufhin werden sechs Bits 15 gesendet, die den sog. Frame-Count darstellen. Nun folgen 32 Bits 16 mit weiteren Steuerinformationen, die z.B. einen Message-Identifier des Telegrams und die Präambel des Übertragungsstandards enthalten können. Zuletzt wird ein Bit 17 gesendet, das die Parität enthält und das Ende des Telegramms markiert.

Die Erfindung ist nicht auf das dargestellte Ausführungsbeispiel beschränkt. Vielmehr sind einzelne Merkmale vorteilhaft miteinander kombinierbar.

## Patentansprüche

1. Verfahren zur zeitstarren Kopplung einer Empfangs- und einer damit verbundenen Sendevorrichtung eines Funkrelais (1) für eine Übertragung von Funksignalen, bei dem sich nach einem festgelegten Zeitschema mindestens ein Übertragungsparameter ändert, die folgenden Schritte aufweisend:
- Empfangen eines Funksignals an der Empfangsvorrichtung (2);
- Auslesen von Steuerinformationen des empfangenen Funksignals in der Empfangsvorrichtung (2);
- Ermitteln des Zeitschemas des empfangenen Funksignals in der Empfangsvorrichtung (2);
- gleichzeitiges Übermitteln des Zeitschemas und der ausgelesenen Steuerinformationen von der Empfangsvorrichtung (2) an die Sendevorrichtung (3) in einem Signal durch zeitliches Abstimmen der Übermittlung der Steuerinformation auf das ermittelte Zeitschema;
- Erfassen der übermittelten Steuerinformationen;
- Analysieren der zeitlichen Struktur der Übertragung der Steuerinformationen und Ermitteln des zugrundeliegenden Zeitschemas; und
- Synchronisierung der Sendevorrichtung auf das ermittelte Zeitschema

2. Verfahren nach Anspruch 1,
**dadurch gekennzeichnet,**
**dass** die ausgelesenen Steuerinformationen mit einem Telegramm (12) an die Sendevorrichtung (3) übermittelt werden.

3. Verfahren nach Anspruch 2,
**dadurch gekennzeichnet,**
**dass** das Telegramm zeitlich so übermittelt wird, dass das jeweils erste Bit des Telegramms das die Änderung des Übertragungsparameter zeitlich festlegende Zeitschema definiert.

4. Verfahren nach einem der Ansprüche 1 bis 3,
**dadurch gekennzeichnet,**
**dass** die Übertragung ein Frequenzsprungverfahren verwendet und die Übertragungsfrequenz an der Empfangsvorrichtung (2) und der Sendevorrichtung (3) nach jedem festgelegten Zeitintervall, das das Zeitschema definiert, entsprechend einer festgelegten Regel gewechselt wird.

5. Ein Funkrelais zur zeitsynchronisierten Weiterleitung bei der Übertragung von Funksignalen, wobei zur Übertragung der nach einem festgelegten Zeitschema mindestens ein Übertragungsparameter geändert wird, aufweisend:
- eine Empfangsvorrichtung (2) zum Empfangen eines Signals;
- eine Empfangskontrollvorrichtung (2a) zum Auslesen von Steuerinformationen und zum Auslesen des verwendeten Zeitschemas des empfangenen Signals;
- eine erste Verbindung (6), welche die Empfangsvorrichtung (2) mit einer Sendevorrichtung (3) verbindet, zur Übermittelung der Steuerinformationen und des Zeitschemas des empfangenen Signals durch zeitlich auf das Zeitschema angepasste Übertragung der Steuerinformation;
- eine Steuerinformationsanalyseeinrichtung zur Analyse der zeitlichen Struktur der übermittelten Steuerinformationen und zur Ermittlung des Zeitschemas; und
- eine Synchronisationseinrichtung zur Synchronisation der Sendevorrichtung auf das so ermittelte Zeitschema.

6. Funkrelais nach Anspruch 5,
**dadurch gekennzeichnet,**
**dass** die ausgelesenen Steuerinformationen mit einem Telegramm (12) an die Sendevorrichtung (3) übermittelbar sind.

7. Funkrelais nach Anspruch 6,
**dadurch gekennzeichnet,**
**dass** durch die Empfangskontrollvorrichtung (2) das Telegramm zeitlich so übermittelbar ist, dass das jeweils erste Bit des Telegramms zeitlich mit dem Zeitschema zusammenfällt.

8. Funkrelais nach einem der Ansprüche 5 bis 7,
**dadurch gekennzeichnet,**
**dass** die Sendekontrollvorrichtung (3a) eine Ausleseeinheit (3c) zum Auslesen des übermittelten Takts und der übermittelten Steuerinformationen aufweist.

## Claims

1. Method for rigid time coupling between a reception apparatus and a transmission apparatus, connected thereto, of a radio relay (1) for transmitting radio signals, in which at least one transmission parameter changes on the basis of a stipulated time schedule, having the following steps:
- a radio signal is received on the reception apparatus (2);
- control information in the received radio signal is read in the reception apparatus (2);
- the time schedule for the received radio signal is ascertained in the reception apparatus (2);
- the time schedule and the control information that has been read are simultaneously transmitted from the reception apparatus (2) to the transmission apparatus (3) in a signal by coordinating the timing of the transmission of the control information with the ascertained time schedule;
- the transmitted control information is captured;
- the timing structure of the transmission of the control information is analysed and the underlying time schedule is ascertained; and
- the transmission apparatus is synchronized to the ascertained time schedule.

2. Method according to Claim 1,
**characterized**
**in that** the control information that has been read is transmitted to the transmission apparatus (3) with a message (12).

3. Method according to Claim 2,
**characterized**
**in that** the message is transmitted with timing such that the respective first bit of the message defines the time schedule that stipulates the timing of the change in the transmission parameter.

4. Method according to one of Claims 1 to 3, **characterized**
**in that** the transmission uses a frequency hopping method and the transmission frequency on the reception apparatus (2) and the transmission apparatus (3) is changed after each stipulated time interval, which the time schedule defines, in accordance with a stipulated rule.

5. Radio relay for synchronized forwarding during the transmission of radio signals, wherein for the transmission at least one transmission parameter is changed on the basis of a stipulated time schedule, having:
- a reception apparatus (2) for receiving a signal;
- a reception control apparatus (2a) for reading control information and for reading the time schedule used for the received signal;
- a first connection (6), which connects the reception apparatus (2) to a transmission apparatus (3), for transmitting the control information and the time schedule for the received signal by transmitting the control information with timing matched to the time schedule;
- a control information analysis device for analysing the timing structure of the transmitted control information and for ascertaining the time schedule; and
- a synchronization device for synchronizing the transmission apparatus to the time schedule ascertained in this manner.

6. Radio relay according to Claim 5,
**characterized**
**in that** the control information that has been read can be transmitted to the transmission apparatus (3) with a message (12).

7. Radio relay according to Claim 6,
**characterized**
**in that** the reception control apparatus (2) can transmit the message with timing such that the timing of the respective first bit of the message coincides with the time schedule.

8. Radio relay according to one of Claims 5 to 7, **characterized**
**in that** the transmission control apparatus (3a) has a reading unit (3c) for reading the transmitted clock and the transmitted control information.

## Revendications

1. Procédé en vue d'un couplage rigide en temps d'un dispositif de réception et d'un dispositif d'émission qui lui est relié d'un relais radio (1), dans lequel au moins un paramètre de transmission est modifié d'après un schéma temporel défini, comportant les étapes suivantes :
- la réception d'un signal radio dans le dispositif de réception (2) ;
- la lecture des informations de commande du signal radio reçu dans le dispositif de réception (2) ;
- la détermination du schéma temporel du signal radio reçu dans le dispositif de réception (2) ;
- la transmission simultanée du schéma temporel et des informations de commande lues du dispositif de réception (2) au dispositif d'émission (3) dans un signal par réglage temporel de la transmission des informations de commande sur le schéma temporel déterminé ;
- la détection des informations de commande transmises ;
- l'analyse de la structure temporelle de la transmission des informations de commande et de la détermination du schéma temporel sous-jacent ; et
- la synchronisation du dispositif d'émission sur le schéma temporel déterminé.

2. Procédé selon la revendication 1, **caractérisé en ce que**
les informations de commande lues sont transmises par un télégramme (12) au dispositif d'émission (3).

3. Procédé selon la revendication 2, **caractérisé en ce que**
le télégramme est transmis temporellement de sorte que le premier bit respectif du télégramme définit le schéma temporel définissant temporellement la modification du paramètre de transmission.

4. Procédé selon l'une des revendications 1 à 3, **caractérisé en ce que**
la transmission utilise un procédé de saut de fréquence et la fréquence de transmission du dispositif de réception (2) et dispositif d'émission (3) est modifiée après chaque intervalle temporel défini, qui définit le schéma temporel, conformément à une règle définie.

5. Relais radio en vue de la transmission synchronisée temporellement par l'intermédiaire de la transmission de signaux radio, dans laquelle au moins un paramètre de transmission est modifié en vue de la transmission d'après un schéma temporel défini, comportant :
- un dispositif de réception (2) pour recevoir un signal ;
- un dispositif de contrôle de réception (2a) pour lire les informations de commande et pour lire le schéma temporel utilisé du signal reçu ;
- une première liaison (6), qui relie le dispositif de réception (2) au dispositif d'émission (3), en vue de la transmission des informations de commande et du schéma temporel du signal reçu grâce à la transmission temporelle adaptée au schéma temporel des informations de commande ;
- un dispositif d'analyse d'informations de commande en vue de l'analyse de la structure temporelle des informations de commande transmises et en vue de la détermination du schéma temporel ; et
- un dispositif de synchronisation en vue de la synchronisation du dispositif d'émission selon le schéma temporel ainsi déterminé.

6. Relais radio selon la revendication 5, **caractérisé en ce que**
les informations de commande lues peuvent être transmises par un télégramme (12) au dispositif d'émission (3).

7. Relais radio selon la revendication 6, **caractérisé en ce que**
le télégramme peut être transmis temporellement par le dispositif de contrôle de réception (2) de sorte que le premier bit respectif du télégramme coïncide temporellement avec le schéma temporel.

8. Relais radio selon l'une des revendications 5 à 7, **caractérisé en ce que**
le dispositif de contrôle d'émission (3a) comporte une unité de lecture (3c) en vue de lire l'horloge transmise et les informations de commande transmises.
